Europäisches Patentamt

European Patent Office

Office européen des brevets

(19)

(11) Publication number: **0 511 803 A1**

## (12) EUROPEAN PATENT APPLICATION

(21) Application number: 92303762.6

(22) Date of filing: 27.04.92

(51) Int. Cl.$^5$: **B29C 33/30**, A61F 5/14, A43B 7/28

(30) Priority: 01.05.91 GB 9109387

(43) Date of publication of application:
04.11.92 Bulletin 92/45

(84) Designated Contracting States:
BE DE DK ES FR IT NL SE

(71) Applicant: Irving, Leslie Frederick
60 New Road
Bromsgrove, Worcestershire B60 2TX (GB)

(72) Inventor: Irving, Leslie Frederick
60 New Road
Bromsgrove, Worcestershire B60 2TX (GB)

(54) **Moulds.**

(57) A mould apparatus for use in manufacturing bespoke complementarily contoured cushion members such, for example, as cushion insole members for footware for subjects with foot deformities employs a large multiplicity of rods 15 supported at their ends by first and second flexible membranes 17,19 formed from a medium viscosity silicone rubber. Under finger pressure applied at a surface say 19a of the membrane 19, the membrane 19 is locally deformed, the rods 15 sliding with respect to one another so as to produce complementary deformation at surface 17a of the other membrane 17. Clamp means 18 is operable by increasing friction between the rods 15 to prevent the rods from subsequent relative sliding movement.

Using the apparatus a bespoke cushioned insole for footwear may be produced to complementarily conform with the contoured surface 19a created by pressing the latter surface into intimate contact with a subject foot whilst the foot is in contact with the surface 17a.

FIG.4

This invention relates to mould apparatus for use in the moulding of cushion members such, for example, as cushion insoles for orthopaedic footwear, to a method of moulding such cushion members using such moulds, and to cushion members formed using the apparatus.

Customarily orthopaedic cushion insoles for subjects with foot deformities such, for examples, as deformities due to arthritic or diabetic conditions, are made using a plaster slipper on the foot, the slipper being made using a plaster bandage to form a negative mould. The negative mould is filled with liquid plaster and, when set and removed from the negative mould, gives the positive mould and the shape of the foot. The insole may be made by various methods using the positive mould.

The following disadvantages of such methods are as follows:

(a) two separate operations are required to make the negative and positive moulds, respectively,

(b) any alterations to relieve a pressure spot, for example, discovered after manufacture of an insole using the positive mould must be made to the positive mould and the success of the alteration in relieving the pressure spot cannot be assured

(c) plaster, by its nature, is messy to use and requires a water supply and suitable room conditions,

(d) that it is time consuming.

Notwithstanding the aforementioned disadvantages the procedure outlined above remains the accepted standard around the world.

Mould apparatuses have been proposed which are reliant upon relative longitudinal movement between a large multiplicity of rods, pin or the like to form a contour which is complementary to the plantar footshape. Other arrangements proposed rely on relative movement between the particles of a particulate mass. Still others rely on the formation of a depression in a suitable fluid. Some of the prior arrangements have employed a flexible membrane as a boundary surface of the mould; others have left the relatively displaceable elements exposed. Certain of the prior art arrangements may have application for certain purposes, for example as a bespoke last from which footwear may be derived; but none of the known arrangements is capable of being employed in the production of bespoke insoles for orthopaedic footwear, such insoles demanding high level of accuracy not attainable using the prior known arrangements.

Aspects of the invention are hereinafter set out in claims 1 and 13 to which reference should now be made.

A mould apparatus, a method of using the mould apparatus in the production of a bespoke contoured cushioned insole, and an insole produced by the method are hereinafter described with reference to the accompanying drawings, in which:

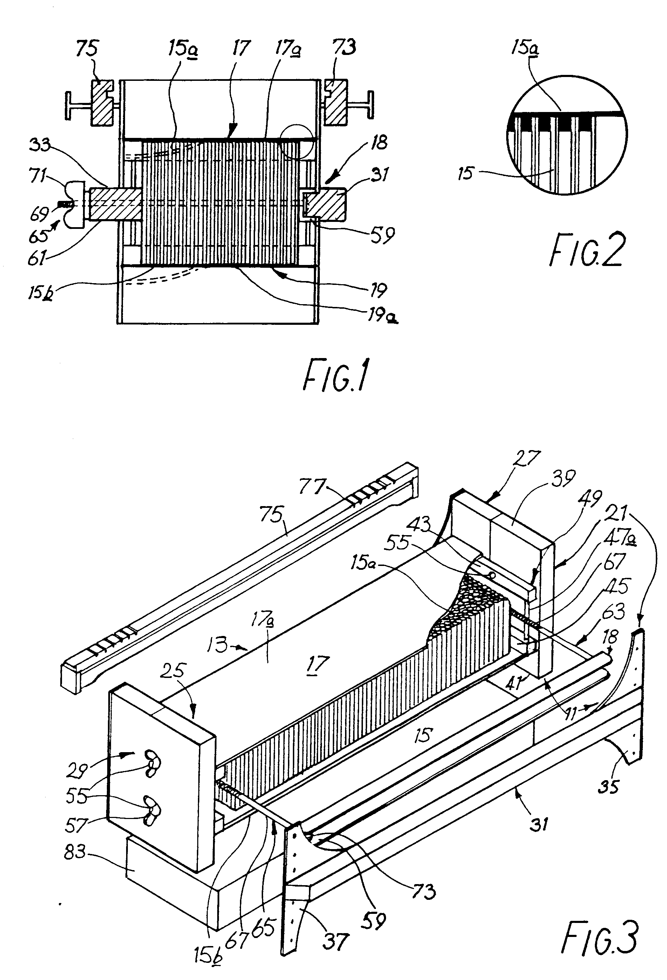

Fig.1 is a partially exploded pictorial diagram of the mould apparatus;

Fig.2 is a pictorial part broken away diagram of the mould element of Fig.1;

Fig.3 is a further pictorial diagram of the said mould element of Fig.1;

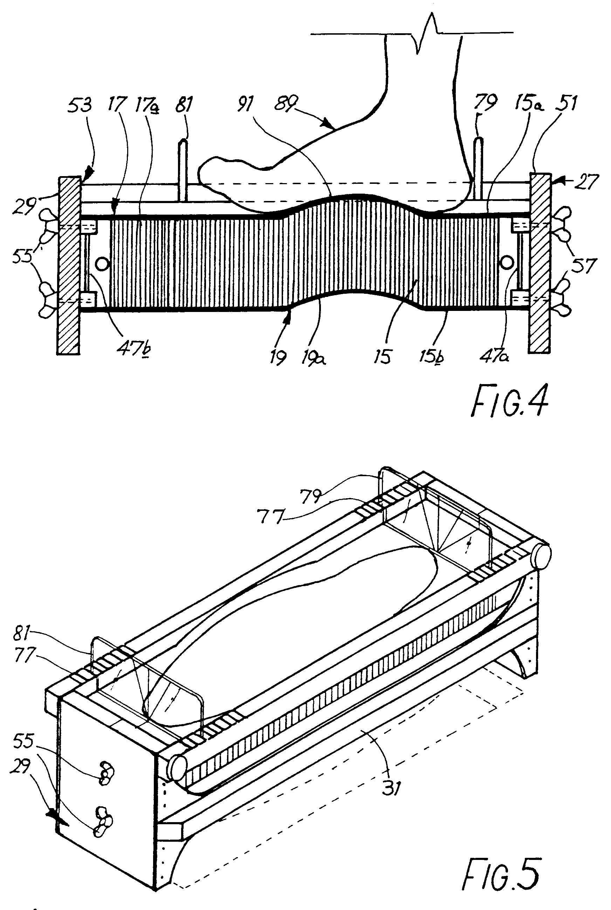

Fig.4 depicts a longitudinal section through the said mould element of Fig.1;

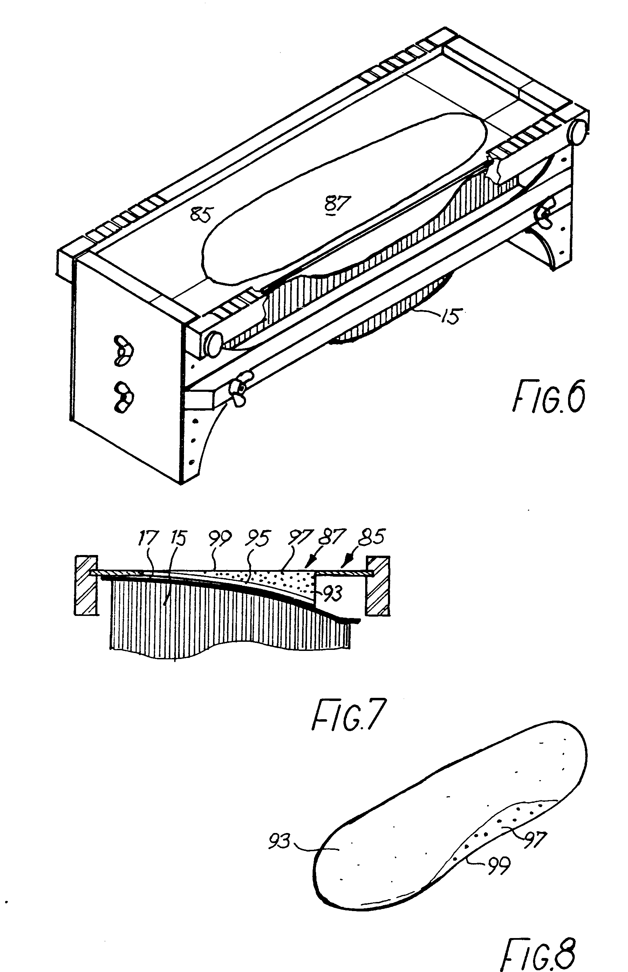

Fig.5 shows a cross-section through the mould element of Fig.1;

Fig.6 is a scrap diagram of a principle feature of the mould element;

Fig.7 shows, pictorially, a cross-section through part of the mould apparatus in the course of use thereof in the production of an insole; and,

Fig.8 is a pictorial representation of an insole produced using the mould apparatus.

The mould apparatus has: a mould carrier 11 and a mould part 13.

The mould part 13 itself comprises: a large multiplicity of rod-like elements 15; means supporting the said elements 15 parallel to one another in an arealy extensive distribution, whilst permitting differential longitudinal movement therebetween against frictional resistance; first and second flexible membranes 17,19, which are respectively in engagement with, collectively, corresponding end portions 15a,15b, respectively, of the elements 15.

The membranes 17,19, have smooth outwardly facing surfaces 17a,19a, respectively, and are of such composition, being, typically, of a medium viscosity silicone rubber which, in the cured state has a shore hardness of about 30, as to be susceptible to local deformation under manual, e.g. finger, pressure applied at a said smooth membrane surface 17a,19a.

The parallel rod-like elements 15 are operative upon local deformation, as aforesaid of the said membrane, to transmit such deformation by differential longitudinal movement as aforesaid, therebetween, so as to produce corresponding though complementary local deformation in the other said membrane.

The aforesaid frictional resistance is such as to resist thereafter unwanted change in local deformation produced in the membranes, the mould element adopting a state or configuration which is stable under applied forces of magnitude less than the friction force opposing relative movement of the elements 15.

Considering the embodiment in somewhat greater detail, the said membranes 17,19, are respectively constituted as first and second matrixes, which respectively bind together the said corresponding end portions 15a,15b, of the elements 15 and which, additionally, constitute the said means supporting the latter elements parallel to one another in arealy extensive distribution.

The rod-like elements 15 are close-packed, frictional resistance therebetween being engendered by lengthwise frictional contact between the said elements.

In the embodiment, the elements 15 are plastic cylindrical tubular elements each 75mm in length and 3 mm in diameter.

The mould carrier 11 comprises: a rigid frame part 21 and first and second parallel motion devices 23,25, respectively.

The rigid frame part 21 has first and second end walls 27,29, respectively, held apart in fixed relationship to one another by rigid beam members 31,33, respectively. The said beam members 31,33, each have end flange portions, as 35,37, respectively, at which the means are secured to the end walls 27,29, the beam members 31,33, extending between the end walls 27,29, at positions intermediate the upper and lower edges 39,42, thereof.

The parallel motion devices 23,25, are independently angularly adjustable, each device comprising upper and lower rigid bar elements, as 43,45, respectively, and first and second wire elements, as 47a,47b, respectively connected at their extremities to the rigid bar elements 43,45, at spaced apart positions, as 49, therealong, the said connections being such as to constrain the devices 23,25, to behave as parallel motion devices. The connections, as at 49, may be by pure pivotal motion between the elements 47a,47b, and the rigid bar elements 43,45; or the wire elements, as in the embodiment depicted, may be secured at their extremities to the said bar elements, parallel motion then relying on the natural resiliently bendable characteristic of the wire elements, the angular deflections encountered in practice being relatively small.

The parallel motion devices are respectively located adjacent to the opposed facing surfaces 51,53, respectively, of the end walls 27,29, being respectively connected to the said walls by screws 55 which extend through aligned holes through the centroids of the bar elements 43,45, and through the end walls 27,29, and wing nuts 57 which, threaded on the said screws 55 from the outer ends thereof are operable to clamp the parallel motion devices in any desired angular position within a certain range.

The aforesaid marginal portions of the said membranes are respectively at two opposite edges of each membrane. The marginal portions of the first membrane 17 are respectively secured to the rigid bar elements 39,41, of the one parallel motion device 23, and the marginal portions of the other membrane 19 are respectively secured to the rigid bar elements 39,41, of the other parallel motion device 25.

The mould apparatus has clamp means 18 for securing the membranes 17,19, against change of contour regardless of the angular positions to which the parallel motion devices may have been set with respect to one another.

The said clamp means comprises first and second rigid channel section strap members 59,61, respectively, and first and second operating devices 63,65, respectively.

The strap members 59,61, respectively extend at opposite sides of the mould carrier 11 lengthwise thereof between the variable motion devices 23,25. The operating devices 63,65, comprise first and second bolts 67,69, respectively, and wing nuts, as 71. The heads, as 73, of the bolts 67,69, are received within the channel of one strap 59 and the shanks of the bolts extend through aligned apertures in the other strap 61 and beam 31. The wing nuts 71 threadedly engage the bolts to cramp the rod-like elements between the strap members 59,61.

First and second lateral rails 73,75, respectively, extend lengthwise of the mould carrier 11 between the end walls 39,41, at opposite corners thereof. The rails 73,75, have slots 77 therein at intervals therealong, the said slots being adapted to receive a heel stop plate 79 and a spacer plate 81.

As a preliminary to use of the mould it is often necessary to ensure that the outwardly facing smooth surfaces 17a,19a, of the membranes 17,19, are flat.

To this end, a rigid body in the form of a block 83 of rectangular cross-section and membrane 19 are brought to contact. The block 83 has a length somewhat less than the spacing between the opposed end wall surfaces 51,53, and a thickness somewhat greater than the distance between the bottom edges 85 of the end walls and the outwardly facing smooth surface of the membrane 19 with the latter extending transversely of the end walls. With the block 83 laid against a stable reaction part, a table, for example, the mould carrier 11 is applied with the said membrane surface in contact with the upper flat surface of the block 83. The membrane 19 is then rendered with its smooth outwards surface to a flat condition either by finger pressure or by the action of a roller thereover.

The mould apparatus being so conditioned, the apparatus is ready for use in the manufacture of a bespoke contoured cushion insole.

A description of a preferred method of using the apparatus for such a purpose is next described.

For reasons of hygiene, a plastic cover (not shown) being a body of thin limp sheet plastic material, e.g. cling film, is laid over the outwards surface 17a of the membrane 17. A template 85, having an aperture 87, to the size of the subject foot 89, is laid over the flat protective cover over the membrane 17. The outline of the aperture 87 is then marked through onto the protective cover. The template 85 is then removed and the heel and stop toes stop plates 79,81, are inserted with lower lateral marginal portions thereof in a pair of aligned slots 77 in the side rails 73,75, so as to align with the heel and toe extremities at the aperture 87 marked onto the said protective cover.

The subject foot is next brought with its plantar surface 91 to contact with the membrane surface 17a, within the confines of the heel and toe stop plates 79,81, and within the area previously marked onto the protective cover from the template 85. Using the fingers, pressure is next applied locally across and along the membrane surface 19a in the area thereof corresponding to the position of the aperture 87 of the rigid template 85 at the membrane 17. In so doing, rod-like elements 15 are displaced with respect to one another under local deformation of the membrane 19. Such displacement of membrane surface 19a and the consequent displacement of elements 15 is determined locally by intimate contact between the membrane surface 17a and the plantar surface 91. At completion of this stage of the method, the membrane surfaces 17a,19a, of the mould part 15 each have a surface contour, the one at the surface 17a being a substantially accurate negative of the plantar surface 91 and the other, at surface 19a being a correspondingly accurate positive of the said plantar surface 91, that is to say, is an accurate representation of the foot surface to be matched by the insole to be produced.

The clamp means 18 is next operated, the strap members cramping the rod-like elements 15 firmly together thus preventing relative movement therebetween.

The heel and toe spacer plates 79,81, having been removed, the template 85 is next applied over the membrane surface 19a, with its aperture at the position exactly corresponding to that previously assumed by the template when in contact with the surface 17a. In so applying the template 85 to the surface 19a, the surface of the template which at the membrane 17a was outwards facing is, of course, employed at the membrane 19a as the inwards facing template surface

With the template 85 accurately so registered, marginal template surfaces, extending from the aperture edge to the membrane surface 19a are greased. A sheet of cling film 93 is then laid over the template 85 and moulded into the aperture 87 so as to make intimate contact with the contoured exposed membrane surface 19a thereby forming side walls to the enclosure formed by the aperture 87 and the membrane 19a, the grease film thereover assisting in the adhesion of the cling film 93. The outwards facing surface of the so-adherent cling film is next greased and a body of shock-absorbing foam rubber material, Cleron (Registered Trade Mark) say, or PPT, and approximately to the foot size, is next laid over the cling film to cover the area of the membrane surface 19a exposed by the template aperture 87.

As a result of the foregoing, the upwards facing surface of the body 95, the cling film drawn upwardly therearound, and the template upper surface extending from the edge of its aperture 87 define a well 97 which is substantially a match with the plantar surface of the subject foot.

The well 97 is next filled with a quick setting, pourable, self-levelling silicone rubber, being a rubber making good adhesion with the body 95. Typically, the silicone rubber is a low viscosity rubber settable in about 3 minutes and which, when set, has a shore hardness of about 30.

A body 99, being the backing member of the insole, viz. the insole part adapted to make contact with the insole platform within the footwear item, is, before the poured silicone rubber shall have set, applied to the upper surface of the poured rubber. The backing member 99 may be of cork, it may be of a silicone, a natural or a foam rubber. It may be of any other suitable material, all possessing good adhesive properties with the set, poured silicone rubber.

After the poured silicone rubber shall have set, the composite body to provide the insole is removed from the well 97 through the aperture 87 of the template 85.

It should be appreciated that the subject foot may deviate angularly from the physiologically normal orthopaedic state, due to an arthritic or other condition; it is to accommodate such conditions that the mould part is slung, as previously described, between the two independently adjustable parallel motion devices 23. By appropriate adjustment of the two said devices 23 or either of them as the case may require, a wide range of orthopaedic abnormalities of the kind referred to may be catered for.

Whilst the method described above uses the mould apparatus in the production of bespoke cushion insole members for footwear, it should be appreciated that the apparatus may be employed in the manufacture of bespoke cushion members more generally. Thus the cushion member may be for the support and comfort of a subject with a body deformity especially, though not exclusively, for subjects confined to wheelchairs. In such cases, the cushion must conform to the body part at which support must be provided. The method previously described in relation to the provision of insoles may be followed. However, in distinction from the requirements for insoles, the cushion may require the incorporation, as the body of further sheet material, not a flexible material, such as a fabric-backed PVC, but a body of rigid sheet material. The body of rigid sheet material could be provided with means by which the cushion may be removably attached to the wheelchair back portion.

Again, given that the wheelchair back or other part against which the cushion has to bear, is itself rigid, it is permissible to omit the provision of the said further body of sheet material, the flat surface of the poured cushion-forming material, covered by a fabric or other sheet cover member, being in contact with the rigid material of the wheelchair back or other reaction part.

In the embodiment described with reference to the accompanying drawings, the rod-like elements 15 are all cylindrical plastic tubes. It may, however, be preferable to employ metal cylindrical tubular elements at the periphery, such tubes having greater mechanical strength than the plastic tubes which are surrounded thereby. The presence of a jacket of such metal tubes serves to protect the interiorly situate plastic against mechanical damage.

## Claims

1. A mould apparatus for use in the manufacture of bespoke body contoured cushion members which has:

    a mould carrier (11); and,

    a mould part (13), itself comprising

        a multiplicity of parallel rod-like elements (15); and

        means supporting the said rod-like elements parallel to one another in an arealy-extensive distribution, whilst permitting differential longitudinal movement therebetween; characterized in that:

        the said rod-like elements (15) are supported at opposite ends thereof by first and second locally manually deformable membranes (17,19), having oppositely outwardly facing smooth major surfaces and being respectively permanently engaged with corresponding end portions (15a) of the rod-like elements (15) and having opposite end marginal portions thereof secured to the said carrier (11); in that the parallel rod-like elements (15) are operative upon local deformation of a membrane (17) to transmit such deformation substantially faithfully, by differential longitudinal movement as aforesaid, so as to produce corresponding though complementary local deformation at the other membrane (19); and in that acting between the said rod-like elements (15) there exists a certain frictional resistance such that after local deformation, as aforesaid, unwanted change in such deformation is resisted.

2. A mould apparatus as claimed in claim 1 characterized in that the said rod-like elements (15) are close packed, frictional resistance against differential longitudinal movement therebetween being engendered by lengthwise frictional contact between the said elements.

3. A mould apparatus as claimed in claim 1 or 2 characterized in that the said membranes (17,19) are elastomeric.

4. A mould apparatus as claimed in any preceding claim characterized in that the preponderance at least of the said rod-like elements (15) are tubular.

5. A mould apparatus as claimed in claim 4 characterized in that the outermost rod-like elements (15) are metal, e.g. aluminium, elements.

6. A mould apparatus as claimed in claim 4 or 5 characterized in that the said preponderance at least of the rod-like elements (15) are of a plastic material.

7. A mould apparatus as claimed in any preceding claim characterized in that the mould carrier (11) comprises:

    a rigid frame part having opposed first and second end walls (27,29), respectively; and,

    first and second independently adjustable parallel motion devices (23,25), respectively attached to the said walls (27,29), at or adjacent to the confronting surfaces thereof; and characterized also in that the said marginal portions of the said first membrane (27), are respectively secured to first corresponding members (39,41) of the parallel motion devices (23,25) and the said marginal portions of the second membrane (29) are respectively secured to second corresponding members (39,41), extending parallel to the said first corresponding members, of the parallel motion device (23,25).

8. A mould apparatus as claimed in claim 7 characterized in that the parallel motion devices (23,25), each comprise first and second rigid elements (39,41), being the elements to each of which a said membrane marginal portion is secured, and first and second resiliently bendable wire elements (47a,47b), secured at their ends to the said rigid elements (39,41) at spaced apart positions therealong.

9. A mould apparatus as claimed in claim 7 or 8 characterized by, clamp means (18) operable with the independently adjustable parallel motion devices (23,25), within at least a certain angular range of positions to clamp the rod-like elements and, hence, the said membranes (27,29), against relative movement.

10. A mould apparatus as claimed in claim 9 characterized in that the said clamp means (18) comprises:

    first and second rigid strap members (59,61), extending lengthwise between the said parallel motion devices (23,25), so as respectively to span opposite sides of the arealy-extensive distribution of rod-like elements; and,

    first and second operating devices (63,65), which incorporate elements (67,69,71), respectively extending transversely of the said strap members (59,61), at or adjacent to opposite ends thereof and which, the said operating devices being actuated, the straps thereof respectively bear against the said opposite sides of the said distribution, clamping together rod-like elements, thereby to develop a high frictional force therebetween.

11. A mould apparatus as claimed in any of claims 7 to 10 characterized by first and second lateral guide rails (73,75), extending lengthwise of the frame part; and at least one member, as (79,81), adapted to the said side rails (73,75), so as to span the gap therebetween at substantially any position along the guide rails.

12. In combination a mould apparatus as claimed in any of claims 1 to 11 and a rigid body (83) having a flat major surface, characterized in that the mould carrier (11) and the said body (83) are such that the said flat surface and the entire outward-facing surface of a membrane (19) of the mould part may be brought together.

13. A method of manufacturing a bespoke complementarily contoured cushion member using a mould apparatus as claimed in any of claims 1 to 12 characterized by the following steps:

   bringing, if need be, to an adequately flat state, the outwardly-facing smooth surfaces of the said first and second membranes (17,19);

   locating, at one such flat membrane surface, a template (85), having an aperture (87) therethrough in the shape of a body part, being an aperture of a size and shape appropriate for the required cushion member to be produced;

   marking through the template aperture (87) a replica thereof in fixed relationship with the membrane surface exposed by the said aperture (87);

   juxtaposing the body part, for which the bespoke cushion member is to be complementarily contoured, and the so-identified flat surface area of the said membrane (17);

   applying pressure across the surface of the other flat membrane (19), with the body part and the so-identified flat surface area of the one membrane (17) so juxtapose, so as to produce local deformation in the so-identified flat membrane surface area, such deformation bringing the so-identified surface area to intimate contoured contact with the subject body part;

   juxtaposing, with the outwards surface of the said outwards surface of the other membrane (19), a template identical with that previously mentioned, and conveniently the same, in mirror image relationship with the position previously occupied thereby;

   applying limp sheet material (93) to overlie the template so juxtaposed; causing the said limp sheet material to be depressed throughout an area therewithin corresponding in outline to the boundary of the template aperture so as to form a well (97) the bottom of which is constituted by limp sheet material (93) in intimate contour-following contact with the membrane surface portion therebeneath exposed through the template aperture and a body (95) of flexible sheet material to the shape of the template aperture superimposed upon the aforesaid contoured limp sheet material and in intimate contour-following contact therewith and the side wall of which is constituted by the limp sheet material at least part of the boundary of the template aperture shaped well bottom;

   pouring into the said well self-levelling settable rubber or like cushion-forming material being such as to form a bond with the body of flexible sheet material; and,

   after the said cushion-forming material is in the substantially set state, removing the resultant composite body from the said well, and trimming the said body, if need be, to provide the bespoke contoured cushion to the requisite template outline.

14. A method as claimed in claim 14 characterized in that a further body (99) of sheet material is thereafter bonded to the exposed flat surface of the poured cushion-forming material.

FIG.1

FIG.2

FIG.3

FIG.4

FIG.5

FIG.6

FIG.7

FIG.8

European Patent
Office

**EUROPEAN SEARCH REPORT**

Application Number

EP    92 30 3762

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 596 869 (D. H. HUMPHREY)<br><br>* column 3, line 20 - line 36 *<br>--- | 1-6,12, 13 | B29C33/30<br>A61F5/14<br>A43B7/28 |
| A | CH-A-190 837 (K. NÖBEL)<br>* the whole document *<br>--- | 1,13 | |
| A | EP-A-0 026 897 (R. GALLINA)<br>* the whole document *<br>--- | 1,13 | |
| A | FR-A-2 560 517 (SIPSE)<br>--- | 1,13 | |
| A | US-A-4 470 782 (ZIMMERMAN, JR ET AL.)<br><br>----- | | |
| | | | **TECHNICAL FIELDS SEARCHED (Int. Cl.5)**<br><br>B29C<br>A61F<br>A43B |

The present search report has been drawn up for all claims

| Place of search | Date of completion of the search | Examiner |
|---|---|---|
| THE HAGUE | 04 AUGUST 1992 | LASSON Cedric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                  
& : member of the same patent family, corresponding
    document

EPO FORM 1503 03.82 (P0401)